# EUROPEAN PATENT APPLICATION

(11) **EP 4 685 714 A1**
(43) Date of publication of application: **28.01.2026**
(21) Application number: 24775063.1
(22) Date of filing: 31.01.2024
(51) Int. Cl.: G06Q 10/06, G06Q 10/04, G06Q 50/26, G06Q 50/04

(54) **PROCESS ANALYSIS APPARATUS AND METHOD**

(30) Priority: 20.03.2023 KR 20230035586
(71) Applicant: Hanwha Solutions Corporation, Seoul 04541 (KR)
(72) Inventor: PARK, Seong Min, Seoul 04541 (KR); JUNG, Ki Taeg, Seoul 04541 (KR); SHIN, Kyeong Seok, Seoul 04541 (KR); HAN, Kee Do, Seoul 04541 (KR)
(74) Representative: Berggren Oy
(86) International application number: PCT/KR2024/001460
(87) International publication number: WO 2024/196015

(57) **Abstract**

Disclosed are a process analysis apparatus and method. The process analysis apparatus of the present invention includes a processor operatively coupled to a user interface unit, a process simulation module that performs economic analysis of a process, and an environmental impact assessment tool that performs environmental impact assessment of the process, in which, when a process simulation program file is uploaded through the user interface unit, the processor collects information for the economic analysis and the environmental impact assessment of the process from the process simulation module and the environmental impact assessment tool based on the process simulation program file to perform the economic analysis and the environmental impact assessment of the process.

## Description

### [Technical Field]

The present invention relates to a process analysis apparatus and method.

### [Background Art]

Past decision-making focuses on quantitative growth, efficiency, and speed, and primarily focuses on economic value. However, recently, the importance and necessity of promoting renewable energy, using alternative materials, and adopting recycled materials with sustainability in mind have been gaining significant attention.

Accordingly, life cycle assessment (LCA), which is an assessment technique developed for environmental impact analysis, is gaining attention. The LCA is a technique for quantifying environmental impacts generated throughout the entire life cycle of processes (a series of processes such as raw material extraction, transportation, product production, distribution, use, disposal, and recycling). As the issue of carbon neutrality gains prominence, the LCA research is being actively conducted by government agencies and industries. In addition, techno-economic analysis (TEA) may be performed to assess the economic feasibility of a developed process. This methodology is specialized for eliminating the bottleneck of research and optimizing processes.

The main role of LCA is supporting decision-making for eco-friendly development, while the main role of economic analysis is determining whether to proceed with a project through a financial assessment of a business. Therefore, the environmental impact assessment and the economic analysis considering both benefits and costs should be conducted concurrently and in a coordinated manner to provide comprehensive information for rational decision-making.

However, most conventional studies perform LCA and economic analysis separately and then utilize multi-objective optimization tools to derive an optimal process that considers parameters of both the economic analysis and LCA. Since the economic analysis and the LCA are performed using different tools, many studies fail to consider the consistent "system boundary" and "functional unit" of the economic analysis and the LCA. In addition, consistent guidelines for performing the economic analysis and the LCA are lacking.

The background art of the present invention is disclosed in Korean Laid-Open Patent Publication No. 10-2005-0117352 (December 14, 2005), "Integration assessment method for Eco-design in Automobile."

### [Detailed Description of Invention]

### [Technical Problem]

The present invention was conceived to address the above-described issues, and one aspect of the present invention is directed to providing a process analysis apparatus and method that are capable of performing both economic analysis and environmental impact assessment of a process system based on a process simulation program file.

### [Technical Solution]

According to one aspect of the present invention, a process analysis apparatus includes a processor operatively coupled to a user interface unit, a process simulation module that performs economic analysis of a process, and an environmental impact assessment tool that performs environmental impact assessment of the process, in which, when a process simulation program file is uploaded through the user interface unit, the processor collects information for the economic analysis and the environmental impact assessment of the process from the process simulation module and the environmental impact assessment tool based on the process simulation program file to perform the economic analysis and the environmental impact assessment of the process.

The processor may search the process simulation program file for basic economic analysis information and use the basic economic analysis information for the economic analysis of the process.

The basic economic analysis information may include at least one of a list of facilities required for the process, basic information for each facility, input and output amounts of raw materials for the process, and utility usage required for the process.

The processor may receive parameter information for the economic analysis of the process through the user interface unit, extract additional economic analysis information from a database, and then use the parameter information and the additional economic analysis information for the economic analysis of the process.

The processor may receive environmental impact assessment analysis conditions for the environmental impact assessment of the process through the user interface unit, transmit the basic economic analysis information to the environmental impact assessment tool, search the environmental impact assessment tool for basic environmental impact assessment information, and use the basic environmental impact assessment information for the environmental impact assessment of the process.

The basic environmental impact assessment information may include at least one of assessment coefficients for each impact category of an input raw material retrieved from the process simulation program file, assessment coefficients for each impact category of used utilities retrieved from the process simulation program file, and assessment coefficients for each impact category of waste water and waste retrieved from the process simulation program file.

The processor may extract additional environmental impact assessment information from a database unit and then use the environmental impact assessment analysis conditions and the additional environmental impact assessment information for the environmental impact assessment of the process.

The processor may calculate at least one of capital expenditure (CAPEX), operating expense (OPEX), and an economic index as a result of performing the economic analysis of the process, and the economic index may include at least one of a net present value, an internal rate of return, and a benefit-cost ratio.

The processor may extract a ratio of the capital expenditure (CAPEX) and the operating expense (OPEX) and the economic index value through chart analysis.

The processor may calculate assessment coefficients for each environmental impact category based on a result of performing the environmental impact assessment of the process, and the assessment coefficients for each environmental impact category may include at least one of climate change, resource consumption, ozone layer impact (O₃ depletion), acidification, eutrophication, photochemical smog (photochemical O₃ formation), and ecotoxicity.

The processor may extract ratios occupied by the climate change, the resource consumption, the ozone layer impact, the acidification, the eutrophication, the photochemical smog, and the ecotoxicity for each element through chart analysis, and the element may include at least one of raw materials, energy, and utility.

When multiple process simulation program files are uploaded, the processor may perform the economic analysis and the environmental impact assessment for each process to compare and analyze economic feasibility and environmental impact for each process.

According to another aspect of the present invention, a process analysis method includes uploading a process simulation program file to a user interface, and collecting, by a processor, key information based on the process simulation program file and performing economic analysis and environmental impact assessment of a process using the key information.

In the performing of the economic analysis and the environmental impact assessment of the process, the processor may search the process simulation program file for basic economic analysis information and use the basic economic analysis information for the economic analysis of the process.

The basic economic analysis information may include at least one of a list of facilities required for the process, basic information for each facility, input and output amounts of raw materials for the process, and utility usage required for the process.

In the performing of the economic analysis and the environmental impact assessment of the process, the processor may receive parameter information for the economic analysis of the process through the user interface unit, extract additional economic analysis information from a database, and then use the parameter information and the additional economic analysis information for the economic analysis of the process.

In the performing of the economic analysis and the environmental impact assessment of the process, the processor may receive environmental impact assessment analysis conditions for the environmental impact assessment of the process through the user interface unit, transmit basic economic analysis information to an environmental impact assessment tool, search the environmental impact assessment tool for the basic environmental impact assessment information, and use the basic environmental impact assessment information for the environmental impact assessment of the process.

The basic environmental impact assessment information may include at least one of assessment coefficients for each impact category of an input raw material retrieved from the process simulation program file, assessment coefficients for each impact category of used utilities retrieved from the process simulation program file, and assessment coefficients for each impact category of waste water and waste retrieved from the process simulation program file.

In the performing of the economic analysis and the environmental impact assessment of the process, the processor may receive environmental impact assessment analysis conditions for the environmental impact assessment of the process through the user interface unit, extract additional environmental impact assessment information from a database unit, and then use the environmental impact assessment analysis conditions and the additional environmental impact assessment information for the environmental impact assessment of the process.

In the performing of the economic analysis and the environmental impact assessment of the process, the processor may calculate at least one of capital expenditure (CAPEX), operating expense (OPEX), and an economic index as a result of performing the economic analysis of the process, and

The economic index may include at least one of a net present value, an internal rate of return, and a benefit-cost ratio.

In the performing of the economic analysis and the environmental impact assessment of the process, a ratio of the capital expenditure (CAPEX) and the operating expense (OPEX) and the economic index value may be extracted through chart analysis.

In the performing of the economic analysis and the environmental impact assessment of the process, the processor may calculate assessment coefficients for each environmental impact category as a result of performing the environmental impact assessment of the process, and the assessment coefficients for each environmental impact category may include at least one of climate change, resource consumption, ozone layer impact (O₃ depletion), acidification, eutrophication, photochemical smog (photochemical O₃ formation), and ecotoxicity.

In the performing of the economic analysis and the environmental impact assessment of the process, the processor may extract ratios occupied by the climate change, the resource consumption, the ozone layer impact, the acidification, the eutrophication, the photochemical smog, and the ecotoxicity for each element through chart analysis, and the element may include at least one of raw materials, energy, and utility.

In the performing of the economic analysis and the environmental impact assessment of the process, when multiple process simulation program files are uploaded, the processor may perform the economic analysis and the environmental impact assessment for each process to compare and analyze economic feasibility and environmental impact for each process.

### [Advantageous Effects]

A process analysis apparatus and method according to one aspect of the present invention perform both economic analysis and environmental impact assessment of a process system based on a process simulation program file.

A process analysis apparatus and method according to another aspect of the present invention enable trade-off analysis between techno-economic performance and environmental performance in terms of minimum production cost and minimum environmental impact, thereby deriving the way to improve the profitability of the existing processes as well as the research and development project and contributing to the low-carbon activities.

A process analysis apparatus and method according to another aspect of the present invention can determine the suitability of the research and development project through economic analysis and environmental impact assessment of a process system, thereby suggesting the development or improvement directions.

A process analysis apparatus and method according to another aspect of the present invention can derive a method of quantitatively assess and analyze an environmental load that can be generated by components of a product to identify key factors that have a relatively large influence, and eliminating and minimizing occurrence causes of the environmental load directly or indirectly generated by these key factors.

A process analysis apparatus and method according to another aspect of the present invention can upload multiple process simulation program files to compare and analyze economic feasibility and environmental impact for each process.

### [Description of Drawings]

FIG. 1 is a block configuration diagram of a process analysis apparatus according to an embodiment of the present invention.
FIG. 2 is a process simulation file upload screen according to an embodiment of the present invention.
FIG. 3 is a diagram illustrating an economic analysis and environmental impact assessment process according to an embodiment of the present invention.
FIG. 4 is an economic analysis result screen according to an embodiment of the present invention.
FIG. 5 is an environmental impact assessment result screen according to an embodiment of the present invention.
FIG. 6 is a flowchart of a process analysis method according to an embodiment of the present invention.

### [Best Mode]

Hereinafter, a process analysis apparatus and method according to an embodiment of the present invention will be described in detail with reference to the attached drawings. In the present description, thicknesses of lines, sizes of components, or the like, illustrated in the accompanying drawings may be exaggerated for clarity and convenience of explanation. In addition, terms to be described below are defined in consideration of functions in the present invention and may be construed in different ways by the intention of users or practice. Therefore, these terms should be defined on the basis of the contents throughout the present specification.

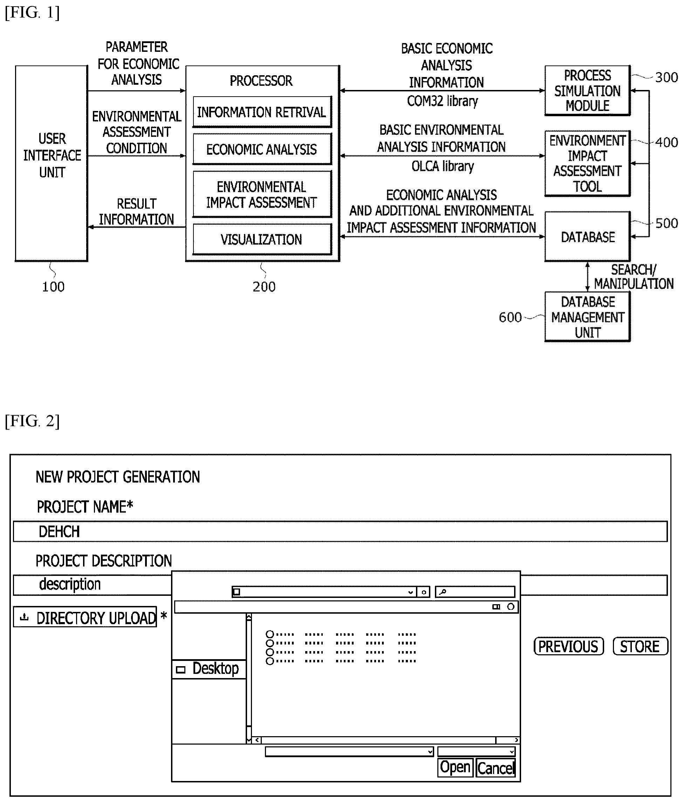

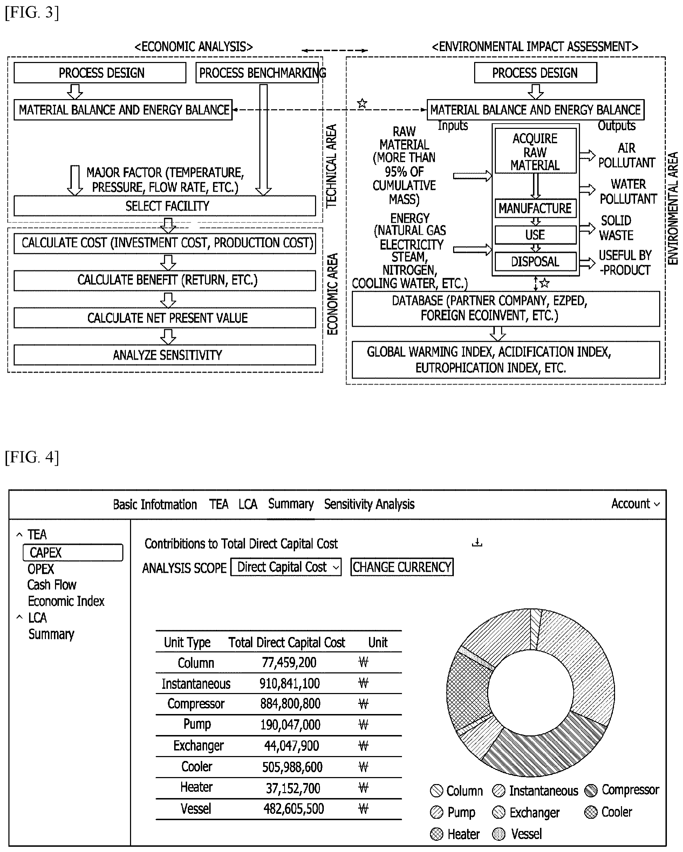

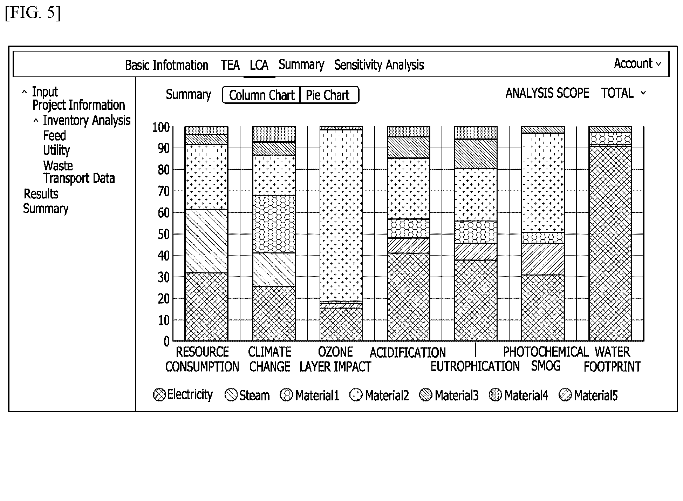

FIG. 1 is a block configuration diagram of a process analysis apparatus according to an embodiment of the present invention, FIG. 2 is a process simulation file upload screen according to an embodiment of the present invention, FIG. 3 is a diagram illustrating a economic analysis and environmental impact assessment process according to an embodiment of the present invention, FIG. 4 is a economic analysis result screen according to an embodiment of the present invention, and FIG. 5 is an environmental impact assessment result screen according to an embodiment of the present invention.

Referring to FIG. 1, a process analysis apparatus according to an embodiment of the present invention includes a user interface unit 100, a processor 200, a process simulation module 300, an environmental impact assessment tool 400, a database 500, and a database management unit 600.

The user interface unit 100 provides a user interface for the economic analysis and environmental impact assessment of the processor 200. The user interface unit 100 may provide various graphical user interfaces (GUIs).

The user interface unit 100 allows the process simulation program file to be uploaded so that the process simulation program file is connected to the process simulation module 300 through the processor 200.

The process may include various processes, such as a plasticizer manufacturing process, and the type of process is not particularly limited.

The process simulation program file may be an Aspen Plus program file or a Super Pro program file. In the present embodiment, the Aspen Plus program file will be described as an example. The type of process simulation program file is not particularly limited.

The user interface unit 100 receives parameters for the economic analysis from a user and inputs the parameters to the processor 200.

The parameters for the economic analysis may include a plant facility investment start year, an annual plant operating time, a depreciation period, an inflation rate, a facility-specific cost estimation model, a material of facility, a diameter and length of a column, and a unit price of each raw material and utility. The parameters for the economic analysis may be variously set depending on the process simulation program file but are not particularly limited.

The user interface unit 100 receives environmental impact assessment conditions for environmental impact assessment from the user and inputs the environmental impact assessment conditions to the processor 200.

The environmental impact assessment conditions may include a functional unit and a life cycle impact assessment (LCIA) methodology. The environmental impact assessment conditions may be variously set depending on the process simulation program file but are not particularly limited.

The user interface unit 100 receives and outputs, from the processor 200, information retrieved or searched by the processor 200.

The information retrieved by the processor 200 may be basic economic analysis information and additional economic analysis information for the economic analysis, and basic environmental impact assessment information and additional environmental impact assessment information for the environmental impact assessment. The basic economic analysis information, the additional economic analysis information, and the additional environmental impact assessment information will be described below.

The user interface unit 100 receives and outputs the economic analysis and the environmental impact assessment results from the processor 200. The economic analysis and the environmental impact assessment results will be described below.

The user interface unit 100 visualizes and displays the economic analysis and the environmental impact results received from the processor 200 in various formats, including text, images, graphs, tables, etc. Accordingly, the user may intuitively understand the economic analysis and the environmental impact assessment results.

The user interface unit 100 may be provided as a user interface, such as a keyboard, a mouse, a touchpad, a touchscreen, an electronic pen, or a touch button. In addition, the user interface unit 100 may include a printer, a display, or the like to output data. Here, the display may be implemented as, for example, a thin film transistor-liquid crystal display (TFT-LCD) panel, a light emitting diode (LED) panel, an organic LED (OLED) panel, an active matrix OLED (AMOLED) panel, a flexible panel, etc.

The process simulation module 300 uploads the process simulation program file through the user interface unit 100.

The process simulation module 300 is connected to the process simulation program file through the processor 200 by uploading the process simulation program file to the user interface unit 100.

The process simulation module 300 receives the basic economic analysis information from the process simulation program file, extracts the basic economic analysis information, and transmits the extracted basic economic analysis information to the processor 200.

The basic economic analysis information may include a list of facilities required for the process, basic information for each facility, input and output amounts of raw materials for the process, and utility usage required for the process. For example, the basic information for each facility may include heat transfer area or pressure for a heat exchanger, a pump flow rate, pump head, and pump motor power for a pump, and temperature, pressure, and the number of trays for a distillation column.

The environmental impact assessment tool 400 receives the basic economic analysis information from the processor 200.

The environmental impact assessment tool 400 uses the basic economic analysis information to generate the basic environmental impact assessment information.

When receiving the basic economic analysis information retrieved from the processor 200, the environmental impact assessment tool 400 generates the basic environmental impact assessment information using the basic economic analysis information and transmits the generated basic environmental impact assessment information to the processor 200. Here, the environmental impact assessment tool 400 may search for component and utility information within the process simulation program file to search for the basic environmental impact assessment information.

The basic environmental impact assessment information may include assessment coefficients for each impact category of input raw materials retrieved from the process simulation program file, assessment coefficients for each impact category of used utilities retrieved from the process simulation program file, and assessment coefficients for each impact category of wastewater and waste retrieved from the process simulation program file. The impact category of the input raw materials may include climate change, eutrophication, acidification, and resource consumption. The basic environmental impact assessment information is not particularly limited.

The database 500 stores information, mathematical formulas, etc., for the economic analysis and the environmental impact assessment. For example, the database 500 stores calculation formulas for the economic analysis and the environmental impact assessment, calculation coefficients for each device, procedures for the economic analysis or the environmental impact assessment, etc. In addition, database 500 stores economic analysis results and environmental impact assessment analysis results.

In addition, the database 500 plays a key role in temporary maintenance and communication (search, storage, and deletion) during data processing.

The database 500 may be built using humongous database (MongoDB) which uses a not only SQL (NoSQL) (non-relational database management system for processing big data).

The database management unit 600, which is compass software (compass S/W), manages the database 500. When the database 500 is constructed as MongoDB that is the NoSQL, the database management unit 600 may be a graphical user interface platform for the MongoDB.

The database management unit 600 stores and searches the database 500 for information, and allows for manipulation and expansion of the information.

When the process simulation program file is uploaded through the user interface unit 100, the processor 200 extracts key information for the economic analysis and the environmental impact assessment of the process from the process simulation program file and uses the key information to perform both the economic analysis and the environmental impact assessment.

The key information for the economic analysis may include the basic economic analysis information, the parameters for the economic analysis, and the additional economic analysis information.

The key information for the environmental impact assessment may include the basic environmental impact assessment information, the environmental impact assessment conditions, and the additional environmental impact assessment information.

The economic analysis may be techno-economic analysis (TEA).

The environmental impact assessment may be life cycle assessment (LCA).

The economic analysis and environmental impact assessment techniques are not particularly limited.

More specifically, when the processor 200 uploads the process simulation program file to the processor 200 through the user interface unit 100 as illustrated in FIG. 2, the process simulation module 300 extracts the basic economic analysis information.

The processor 200 searches the process simulation module 300 for the basic economic analysis information. The process simulation module 300 transmits the basic economic analysis information to the processor 200 by allowing the processor 200 to search for the basic economic analysis information.

The processor 200 outputs the basic economic analysis information through the user interface unit 100.

The processor 200 outputs the basic economic analysis information through the user interface unit 100 and receives the parameters for the economic analysis from the user.

The processor 200 receives the parameters for the economic analysis through the user interface unit 100 and searches the database 500 for the additional economic analysis information.

The additional economic analysis information may include a cost estimation formula for each facility, a formula for calculating total capital cost from total equipment cost, and a formula for calculating economic indicators from capital expenditure (CAPEX) and operating expense (OPEX). The cost estimation formula for each facility may include values of variables specific to a facility type, an estimation model, or a facility material. The additional economic analysis information is not particularly limited.

The processor 200 performs the economic analysis using the basic economic analysis information, the parameters for the economic analysis, and the additional economic analysis information. The processor 200 may calculate a ratio of the capital expenditure (CAPEX) and the operating expense (OPEX) and an economic index based on the economic analysis results. The economic index may include a net present value, an internal rate of return, and a benefit-cost ratio. The economic analysis results are not particularly limited.

For example, when the process simulation program file is uploaded, the processor 200 searches the process simulation program file for the basic economic analysis information, such as the size, flow rate, temperature, and pressure of each unit, and receives the parameters for the economic analysis through the user interface unit 100. In addition, the processor 200 searches the database 500 for the additional economic analysis information. In this case, the processor 200 calculates the total equipment cost using the built-in equipment cost information. In addition, the processor 200 may use a percentage method based on a rule of thumb to calculate the capital expenditure.

Meanwhile, the processor 200 receives the environmental impact assessment analysis conditions for the environmental impact assessment of the process through the user interface unit 100.

In addition, the processor 200 searches the additional environmental impact assessment information from the database 500. The additional environmental impact assessment information may include a calculation formula for the environmental impact assessment results of the target process based on functional units, and corporate and national information related to the environmental impact assessment.

In addition, the processor 200 inputs the basic economic analysis information to the environmental impact assessment tool 400 and searches for the basic environmental impact assessment information. In this case, the environmental impact assessment tool 400 generates the basic environmental impact assessment information based on the basic economic analysis information input from the processor 200 and inputs the generated basic environmental impact assessment information to the processor 200. In this case, the environmental impact assessment tool 400 may search for component and utility information within the process simulation program file to search for the basic environmental impact assessment information.

The processor 200 outputs the basic environmental impact assessment information through the user interface unit 100.

The processor 200 performs the environmental impact assessment using the basic environmental impact assessment information, the environmental impact assessment conditions, and the additional environmental impact assessment information.

The processor 200 calculates assessment coefficients for each environmental impact category based on the environmental impact assessment results. The assessment coefficients for each environmental impact category may include climate change, resource consumption, ozone layer impact (O₃ depletion), acidification, eutrophication, photochemical smog (photochemical O₃ formation), and ecotoxicity.

The processor 200 may calculate and output ratios occupied by the climate change, the resource consumption, the ozone layer impact, the acidification, the eutrophication, the photochemical smog, and the ecotoxicity for each factor through the chart analysis.

Here, the factors may include, but are not particularly limited to, raw materials, energy, and utilities.

In this way, the processor 200 not only assesses impacts caused by a specific medium as the environmental impact assessment, but also predicts potential environmental impacts that may arise from all media.

Referring to FIG. 3, the processor 200 performs both the economic analysis and the environmental impact assessment using the basic economic analysis information as a common foundation.

The processor 200 may visualize the economic analysis results and the environmental impact assessment results in various formats, including text, images, graphs, tables, etc.

FIG. 4 illustrates the economic feasibility assessment results, and FIG. 5 illustrates the environmental impact assessment results.

As illustrated in FIGS. 4 and 5, the processor 200 visualizes the economic feasibility assessment results in various formats, including text, images, graphs, tables, etc., and displays the visualized economic feasibility assessment results through the user interface unit 100.

Accordingly, a user may intuitively understand the economic analysis results and the environmental impact assessment results and identify the trade-off between the economic feasibility and the environmental impact.

In addition, multiple process simulation program files may be uploaded. In this way, when multiple process simulation program files are uploaded, the processor 200 performs the economic analysis and the environmental impact assessment for each process. Subsequently, the processor 200 may compare and analyze the economic analysis results and the environmental impact assessment results for each process.

Meanwhile, the processor 200 may be connected to a memory (not illustrated), which may store instructions for performing operations, steps, etc., according to an embodiment of the present invention. Here, the memory may include magnetic storage media or flash storage media in addition to volatile storage devices requiring power to maintain stored information, but the scope of the present invention is not limited thereto.

In addition, the processor 200 may be configured such that its components for performing respective functions are distinguished at the hardware, software, or logic level. In this case, dedicated hardware may be used to perform each function. To this end, the processor 200 may be implemented as at least one of an application specific integrated circuit (ASIC), a digital signal processor (DSP), a programmable logic device (PLD), a field programmable gate array (FPGA), a central processing unit (CPU), microcontrollers, and/or microprocessors, or include at least one of them.

Meanwhile, the processor 200 may be implemented as a stand-alone server or a cloud server. The server includes a Python language.

The processor 200 and the process simulation module 300, the processor 200 and the environmental impact assessment tool 400, and the processor 200 and the database 500 may be connected through various communication networks.

The communication unit 110 may adopt 3rd generation partnership project (3GPP), long term evolution (LTE), 5 generation (5G), world interoperability for microwave access (WiMAX), wired and wireless Internet, local area network (LAN), wireless local area network (wireless LAN), wide area network (WAN), personal area network (PAN), Bluetooth, wireless fidelity (WiFi), etc., but is not particularly limited thereto.

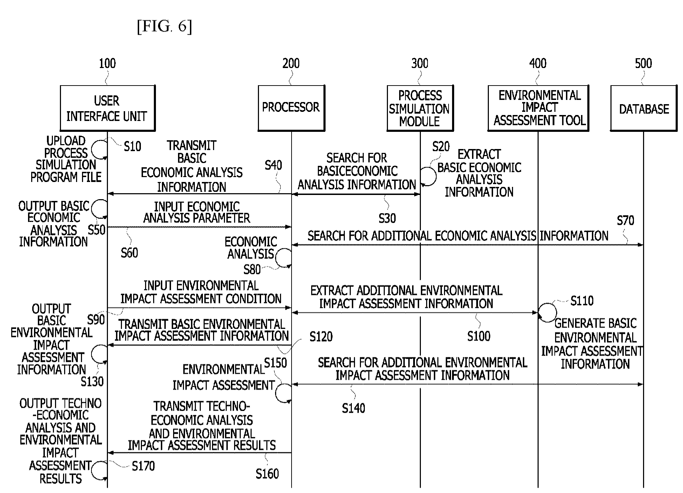

Hereinafter, a process analysis method according to an embodiment of the present invention will be described with reference to FIG. 6.

FIG. 6 is a flowchart of the process analysis method according to an embodiment of the present invention.

Referring to FIG. 6, the user interface unit 100 uploads the process simulation program file to the process simulation module 300 according to a user control command (S10).

As the process simulation program file is uploaded to the process simulation module 300, the process simulation module 300 extracts the basic economic analysis information (S20).

The processor 200 searches the process simulation module 300 for the basic economic analysis information (S30). In this case, when receiving the basic economic analysis information retrieved from the processor 200, the process simulation module 300 transmits the basic economic analysis information to the processor 200.

The processor 200 transmits the basic economic analysis information to the user interface unit 100 (S40).

The user interface unit 100 outputs the basic economic analysis information (S50).

The user interface unit 100 inputs the parameters for the economic analysis from a user to the processor 200 (S60).

The processor 200 searches the database 500 for the additional economic analysis information by receiving the economic analysis parameters through the user interface unit 100 (S70).

Therefore, the processor 200 performs the economic analysis using the basic economic analysis information, the parameters for the economic analysis, and the additional economic analysis information (S80), thereby calculating the CAPEX, the OPEX, and the economic index.

Meanwhile, the user interface unit 100 inputs the environmental impact assessment conditions for the environmental impact assessment from a user to the processor 200 (S90).

In addition, the processor 200 inputs the basic economic analysis information to the environmental impact assessment tool 400 and searches the environmental impact assessment tool 400 for the basic environmental impact assessment information (S100). In this case, the environmental impact assessment tool 400 generates the basic environmental impact assessment information based on the input basic economic analysis information and inputs the generated basic environment impact assessment information to the processor 200 (S110).

The processor 200 transmits the basic environmental impact assessment information to the user interface unit 100 (S120).

The user interface unit 100 outputs the basic environmental impact assessment information (S130).

Meanwhile, as described above, the processor 200 receives the environmental impact assessment conditions through the user interface unit 100 and searches the database 500 for the additional environmental impact assessment information (S140).

The processor 200 performs the environmental impact assessment using the basic environmental impact assessment information, the environmental impact assessment conditions, and the additional environmental impact assessment information, thereby calculating the assessment coefficients for each environmental impact category (S150).

The processor 200 transmits the economic analysis results and the environmental impact assessment results to the user interface unit 100 (S160).

The user interface unit 100 outputs the economic analysis results and the environmental impact assessment results received from the processor 200 (S170).

In this case, the processor 200 may visualize and display the economic analysis results and the environmental impact assessment results in various formats, including text, images, graphs, tables, etc. In addition, the processor 200 may calculate and output the ratios of the climate change, the resource consumption, the ozone layer impact, the acidification, the eutrophication, the photochemical smog, and the ecotoxicity through the chart analysis.

Meanwhile, in an embodiment of the present invention, the information for the economic analysis and the environmental impact assessment is not necessarily generated and transmitted in the order illustrated in FIG. 6 and may be modified as selected or needed.

In this way, the process analysis apparatus and method according to an embodiment of the present invention perform both the economic analysis and the environmental impact assessment of the process system based on the process simulation program file.

In addition, the process analysis apparatus and method according to an embodiment of the present invention enable trade-off analysis between techno-economic performance and environmental performance in terms of minimum production cost and minimum environmental impact, thereby deriving the way to improve the profitability of the existing processes as well as the research and development project and contributing to low-carbon activities.

In addition, the process analysis apparatus and method according to an embodiment of the present invention may determine the suitability of the research and development project through the economic analysis and the environmental impact assessment of the process system, thereby suggesting the development or improvement directions.

In addition, the process analysis apparatus and method according to an embodiment of the present invention may derive the method of quantitatively assess and analyze the environmental load that may be generated by the components of the product to identify the key factors that have a relatively large influence, and eliminating and minimizing the occurrence cause of the environmental load directly or indirectly generated by these key factors.

In addition, the process analysis apparatus and method according to an embodiment of the present invention may upload multiple process simulation program files to compare and analyze the economic feasibility and environmental impact for each process.

Implementations described herein may be implemented in, for example, a method or process, an apparatus, a software program, a data stream, or a signal. Although discussed only in the context of a single form of implementation (e.g., discussed only as a method), implementations of the discussed features may also be implemented in other forms (e.g., an apparatus or a program). The apparatus may be implemented in suitable hardware, software, and firmware, and the like. A method may be implemented in an apparatus such as a processor 200, which generally refers to a computer, a microprocessor 200, an integrated circuit, a processing device including a programmable logic device, or the like. The processor 200 also includes communication devices such as a computer, a cell phone, portable/personal digital assistants ("PDA"), and other devices that facilitate communication of information between end-users.

Although the present invention has been described with reference to embodiments shown in the accompanying drawings, it is only an example. It will be understood by those skilled in the art that various modifications and equivalent other exemplary embodiments are possible from the present invention. Accordingly, a true technical scope of the present invention is to be determined by the spirit of the appended claims.

## Claims

1. A process analysis apparatus comprising a processor operatively coupled to a user interface unit, a process simulation module that performs economic analysis of a process, and an environmental impact assessment tool that performs environmental impact assessment of the process,
wherein, when a process simulation program file is uploaded through the user interface unit, the processor collects information for the economic analysis and the environmental impact assessment of the process from the process simulation module and the environmental impact assessment tool based on the process simulation program file to perform the economic analysis and the environmental impact assessment of the process.

2. The process analysis apparatus of claim 1, wherein the processor searches the process simulation program file for basic economic analysis information and uses the basic economic analysis information for the economic analysis of the process.

3. The process analysis apparatus of claim 2, wherein the basic economic analysis information includes at least one of a list of facilities required for the process, basic information for each facility, input and output amounts of raw materials for the process, and utility usage required for the process.

4. The process analysis apparatus of claim 2, wherein the processor receives parameter information for the economic analysis of the process through the user interface unit, extracts additional economic analysis information from a database, and then uses the parameter information and the additional economic analysis information for the economic analysis of the process.

5. The process analysis apparatus of claim 2, wherein the processor receives environmental impact assessment analysis conditions for the environmental impact assessment of the process through the user interface unit, transmits the basic economic analysis information to the environmental impact assessment tool, searches the environmental impact assessment tool for basic environmental impact assessment information, and uses the basic environmental impact assessment information for the environmental impact assessment of the process.

6. The process analysis apparatus of claim 1, wherein the processor calculates at least one of capital expenditure (CAPEX), operating expense (OPEX), and an economic index as a result of performing the economic analysis of the process, and
the economic index includes at least one of a net present value, an internal rate of return, and a benefit-cost ratio.

7. The process analysis apparatus of claim 6, wherein the processor extracts a ratio of the capital expenditure (CAPEX) and the operating expense (OPEX) and the economic index value through chart analysis.

8. The process analysis apparatus of claim 1, wherein the processor calculates assessment coefficients for each environmental impact category based on a result of performing the environmental impact assessment of the process, and
the assessment coefficients for each environmental impact category include at least one of climate change, resource consumption, ozone layer impact (O₃ depletion), acidification, eutrophication, photochemical smog (photochemical O₃ formation), and ecotoxicity.

9. The process analysis apparatus of claim 8, wherein the processor extracts ratios occupied by the climate change, the resource consumption, the ozone layer impact, the acidification, the eutrophication, the photochemical smog, and the ecotoxicity for each element through chart analysis, and
the element includes at least one of raw materials, energy, and utility.

10. The process analysis apparatus of claim 1, wherein, when multiple process simulation program files are uploaded, the processor performs the economic analysis and the environmental impact assessment for each process to compare and analyze economic feasibility and environmental impact for each process.

11. A process analysis method comprising:
uploading a process simulation program file to a user interface; and
collecting, by a processor, key information based on the process simulation program file and performing economic analysis and environmental impact assessment of a process using the key information.

12. The process analysis method of claim 11, wherein, in the performing of the economic analysis and the environmental impact assessment of the process, the processor searches the process simulation program file for basic economic analysis information and uses the basic economic analysis information for the economic analysis of the process.

13. The process analysis method of claim 12, wherein the basic economic analysis information includes at least one of a list of facilities required for the process, basic information for each facility, input and output amounts of raw materials for the process, and utility usage required for the process.

14. The process analysis method of claim 12, wherein, in the performing of the economic analysis and the environmental impact assessment of the process, the processor receives parameter information for the economic analysis of the process through the user interface unit, extracts additional economic analysis information from a database, and then uses the parameter information and the additional economic analysis information for the economic analysis of the process.

15. The process analysis method of claim 12, wherein, in the performing of the economic analysis and the environmental impact assessment of the process, the processor receives environmental impact assessment analysis conditions for the environmental impact assessment of the process through the user interface unit, transmits the basic economic analysis information to an environmental impact assessment tool, searches the environmental impact assessment tool for basic environmental impact assessment information, and uses the basic environmental impact assessment information for the environmental impact assessment of the process.

16. The process analysis method of claim 11, wherein, in the performing of the economic analysis and the environmental impact assessment of the process,
the processor calculates at least one of capital expenditure (CAPEX), operating expense (OPEX), and an economic index as a result of performing the economic analysis of the process, and
the economic index includes at least one of a net present value, an internal rate of return, and a benefit-cost ratio.

17. The process analysis method of claim 16, wherein, in the performing of the economic analysis and the environmental impact assessment of the process,
a ratio of the capital expenditure (CAPEX) and the operating expense (OPEX) and the economic index value are extracted through chart analysis.

18. The process analysis method of claim 11, wherein, in the performing of the economic analysis and the environmental impact assessment of the process,
the processor calculates assessment coefficients for each environmental impact category as a result of performing the environmental impact assessment of the process, and
the assessment coefficients for each environmental impact category include at least one of climate change, resource consumption, ozone layer impact (O₃ depletion), acidification, eutrophication, photochemical smog (photochemical O₃ formation), and ecotoxicity.

19. The process analysis method of claim 18, wherein, in the performing of the economic analysis and the environmental impact assessment of the process,
the processor extracts ratios occupied by the climate change, the resource consumption, the ozone layer impact, the acidification, the eutrophication, the photochemical smog, and the ecotoxicity for each element through chart analysis, and
the element includes at least one of raw materials, energy, and utility.

20. The process analysis method of claim 11, wherein, in the performing of the economic analysis and the environmental impact assessment of the process,
when multiple process simulation program files are uploaded, the processor performs the economic analysis and the environmental impact assessment for each process to compare and analyze economic feasibility and environmental impact for each process.
